# EUROPEAN PATENT APPLICATION

(11) **EP 4 075 360 A1**
(43) Date of publication of application: **19.10.2022**
(21) Application number: 21305496.8
(22) Date of filing: 15.04.2021
(51) Int. Cl.: G06Q 20/32, G06Q 20/34

(54) **METHOD FOR CONTROLLING A SMART CARD**

(71) Applicant: Thales DIS France SA, 92190 Meudon (FR)
(72) Inventor: SALLES, Jean-Luc, 92190 MEUDON (FR); PALADJIAN, Pierre, 92190 MEUDON (FR); MARTINEZ, Frédéric, 92190 MEUDON (FR)
(74) Representative: Grevin, Emmanuel

(57) **Abstract**

The invention is a method for controlling a card (10) allocated to a user (50) and able to participate to a transaction with a terminal (30). The method comprises the following steps:
- Before the transaction starts:
- generating (S1) an authentication data (14) reflecting a successful authentication of the user by checking a personal data (52) provided by the user,
- Associating (S2) a limited validity duration to the authentication data,
- Storing (S3) said authentication data and limited validity duration into the card,

- Once the transaction has started:
- Receiving (S4) by the card a request (32) to authorize the transaction,
- Upon receipt of said request, generating (S5) a message (34) which authorizes the transaction only if the card has access to said authentication data and if the limited validity duration has not expired, then sending (S6) the message to the terminal

## Description

### (Field of the invention)

The present invention relates to methods for controlling a smart card. It relates particularly to methods for controlling a smart card designed to conduct a transaction when coupled to a terminal.

### (Background of the invention)

When performing a transaction with a terminal like a Point-Of-Sale (POS) terminal, a smart card generally uses a data (like a PIN code) provided by the cardholder through a user input interface (like a keyboard) hosted by the terminal or by the smart card. For a PIN code checking, the smart card may retrieve the typed data from the terminal and use it for authenticating the user or for verifying user consent for the operation of a particular function provided by the card. The smart card may embed a biometric sensor and capture a biometric data provided by the user and use it for authenticating the user.

Cardholder authentication experience for a transaction may be perceived as difficult or stressful when they have to enter their PIN code or present their finger for validating a transaction, such as a payment, in front of a terminal. In particular, capture of a fingerprint may require more than one attempts.

The document EP2199992A1 discloses a secure activation which occurs before a contactless banking smart card transaction. Unfortunately, if a smart card storing a pre-perform activation is lost and falls into malicious hands, a transaction can be carried out with this card without the knowledge of the genuine user.

There is a need to propose way to control a smart card in a way which is both secure and convenient for the user.

### (Summary of the Invention)

The invention aims at solving the above mentioned technical problem.

An object of the present invention is a method for controlling a smart card which is allocated to a user. The smart card is configured to participate to a transaction with a terminal. The method comprises the steps:
- Before the transaction starts:
   - generating an authentication data reflecting a successful authentication of the user by checking a personal data provided by the user,
   - Associating a limited validity duration to the authentication data,
   - Storing the authentication data and the limited validity duration into the smart card,
- Once the transaction has started:
   - Receiving by the smart card a request to authorize the transaction, the request being sent by the terminal,
   - Upon receipt of said request, generating a message which authorizes the transaction only if the smart card has access to said authentication data and if the limited validity duration has not expired, then sending the message to the terminal.

Advantageously, the smart card may be configured to update either the authentication data or a metadata specifying a rule to access the authentication data when generating the message.

Advantageously, the smart card may embed a real time clock and an internal energy source and the smart card may check if the limited validity duration has expired by comparison with the real time clock.

Advantageously, the smart card may embed a capacitor configured to discharge in a time depending on the limited validity duration, the card may charge the capacitor when the authentication data becomes available for the smart card and the card may lose access to the authentication data as soon as has the capacitor is discharged.

Advantageously, the smart card may establish a communication channel with a portable apparatus distinct from the terminal, the portable apparatus may get the personal data, generate the authentication data and send the authentication data to the smart card.

Advantageously, the personal data may be a PIN code, a password, a drawn pattern, a picture of the user or a fingerprint of the user.

Advantageously, the portable apparatus may identify a constraint that the smart card must respect to use said authentication data and send the constraint to the smart card, said constraint being in the group: Said limited validity duration, a maximum amount for a payment transaction, a cumulated payment amount for a payment transaction, a number of consecutive transactions or an authorized security level for an requesting access to a specific security level area.

Another object of the present invention is a smart card allocated to a user and able to participate to a transaction with a terminal. The smart card is configured to:
- Before the transaction starts:
   - get an authentication data reflecting a successful authentication of the user by checking a personal data provided by the user,
   - Associate a limited validity duration to the authentication data,
   - Store said authentication data and said limited validity duration into the smart card,
- Once the transaction has started:
   - Receive a request to authorize the transaction sent by the terminal,
   - Upon receipt of said request, generate a message which authorizes the transaction only if the smart card has access to said authentication data and if the limited validity duration has not expired, then to send the message to the terminal.

Advantageously, the smart card may be configured to generate the authentication data and the limited validity duration.

Advantageously, the smart card may embed both a real time clock and an internal energy source and the smart card may be configured to check if the limited validity duration has expired by comparison with the real time clock.

Advantageously, the smart card may embed a capacitor configured to discharge in a time depending on the limited validity duration, the smart card may be configured to charge the capacitor when said authentication data becomes available for the smart card and the smart card may be configured to lose access to the authentication data as soon as has the capacitor is discharged.

Advantageously, the smart card may be configured to establish a communication channel with a portable apparatus distinct from the terminal, the portable apparatus may get the personal data from the user, generate the authentication data and send the authentication data to the smart card.

Advantageously, the smart card may be configured to establish a communication channel with a portable apparatus distinct from the terminal, the portable apparatus may get said personal data from the user and send the personal data to the smart card and the smart card may be configured to generate the authentication data.

Advantageously, the portable apparatus may be configured to identify a constraint that the smart card must respect to use said authentication data and to send said constraint to the smart card, said constraint being in the group: Said limited validity duration, a maximum amount for a payment transaction, a cumulated payment amount for a payment transaction, a number of consecutive transactions or an authorized security level for an requesting access to a specific security level area.

Another object of the present invention is a system comprising a smart card according to an embodiment of the invention and a portable apparatus distinct from the terminal. The smart card and the apparatus may be configured to establish a communication channel, the portable apparatus may embed a user interface able to capture an input data from a user, and an authenticating unit configured to generate the authentication data and to send the authentication data to the smart card.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows an exemplary architecture of smart card according to an example of the invention,
- Figure 2 shows a diagram of architecture of a system comprising a portable apparatus and a smart card according to an example of the invention, and
- Figure 3 shows an exemplary flow diagram for controlling a smart card according to an example of the invention.

### (Detailed description of the preferred embodiments)

Smart cards are portable small devices comprising at least a memory, a microprocessor and an operating system for computing treatments. They may comprise services applications like payment, access control, identity or telecom applications. Smart cards may be considered as secure elements. They may comprise a plurality of memories of different types, like non-volatile memory and volatile memory. They are considered as tamper-resistant (or "secure") because they are able to control access to the data they contain and to authorize or not the use of their data by other machines. A smartcard may also provide computation services based on cryptographic engines. In general, smartcards have limited computing resources and limited memory resources and they are intended to connect a host machine which may provide them with electric power either in contact mode or contactless mode.

The invention may apply to any type of smart cards intended to participate to a transaction with a terminal. For example the smartcard may be a banking smart card, a transport card, an access badge, a loyalty card or an identity document.

The invention is well-suited for smartcards which have very limited user input interface or are devoid of user input interface.

Some embodiments of the invention may apply to any type of portable apparatus intended to be coupled to a smart card and able to get data from the cardholder. The portable apparatus may be a smartphone, a tablet, a Personal Digital Assistant (PDA) or a wearable device like a watch, glasses, a key ring or a bracelet for instance.

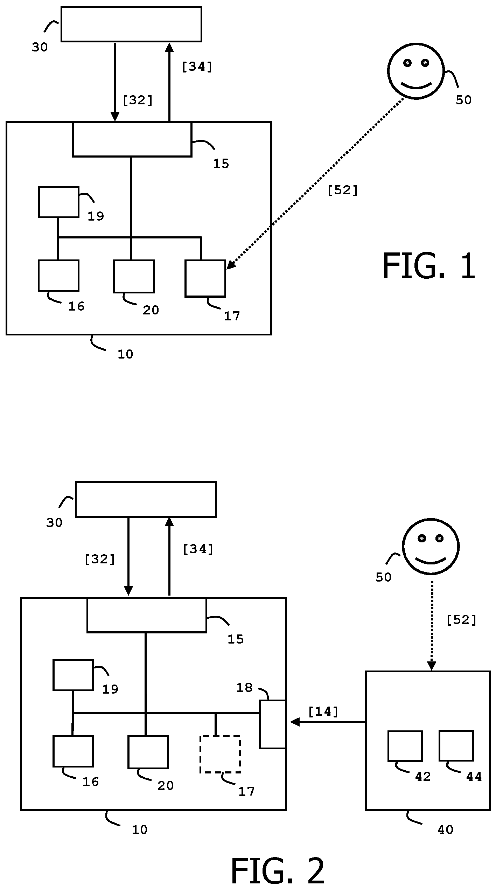

Figure 1 depicts an exemplary architecture of a smart card according to an example of the invention.

The smart card 10 may be a payment card. The smart card is coupled to a terminal 30 which may be a hardware device intended to power the card, to establish a communication session with the smart card and to exchange data with the smart card.

The terminal 30 embeds a card reader able to establish a communication session with the smart card 10 in contact or contactless mode.

The terminal 30 and the card 10 may communicate using NFC (Near Field Communication) technology which is based on the exchanging of data via a modulated magnetic field. A NFC reader has an antenna which is able to modulate the magnetic field and to provide energy to NFC card. A contactless card and a contactless apparatus (comprising a NFC reader) may communicate thanks to an inductive coupling in a field frequency equal to 13.56 MHz. In particular, the ISO14443, ISO/IEC21481 and ISO18092 standards provide modulation technologies and communication protocols which may be used in NFC domain.

The terminal 30 and the card 10 may communicate using ISO/IEC-7816 protocols (like T=0 or T=1 for instance), through the SWP (Single Wire Protocol) or any relevant protocol in contact mode.

The smart card 10 comprises a secure chip 20 (also called secure element), an internal energy source 16, a user input interface 17 and a physical communication interface 15 designed to communicate with the terminal 30. The internal energy source 16 may be a battery or a large capacitor.

In some embodiments, the smart card 10 may be devoid of internal energy source and be designed to get power through the physical communication interface 15.

Preferably, the user input interface 17 is a biometric sensor like a fingerprint scanner. In some embodiments, the user input interface may be a button, a keyboard, a microphone, a motion sensor or a camera.

The secure element 20 may be a conventional smart card chip with additional features. The secure element 20 may comprise a processor and a set of software and/or hardware instructions which are executed by the processor to perform the functions of the secure element. The secure element 20 comprises an application which is designed to contribute to a transaction involving the terminal 30. For instance, the application may be a payment application.

In some embodiments, the secure element is configured to get a personal data 52 provided by a user 50 through the user input interface 17, to authenticate the user by checking the validity of the personal data 52 and generate an authentication data 14 reflecting a successful authentication of the user. Preferably, the personal data 52 is a fingerprint. Depending on the nature of the user input interface, the captured personal data 52 may be a PIN code, a password, a gesture, or a picture for instance.

The secure element is configured to associate a limited validity duration to the identified authentication data 14 and to store the authentication data 14 and the associated limited validity duration into a memory of the smart card.

The validity duration may be expressed as a date or a duration. For instance, the validity duration may be set to 30 seconds or 180 seconds.

It is to ne noted that the capture of the personal data, the generation of the authentication data and the storing of the pair constituted by the authentication data and the associated duration validity is performed by the smart card independently of any transaction. Consequently, all these operations may be performed before a transaction starts with the terminal coupled to the smartcard 10.

Once the transaction has started, the smart card 10 is configured to receive a request 32 (sent by the terminal 30) to authorize the transaction.

Upon receipt of the request 32, the smart card 10 is configured to generate a message 34 which authorizes the transaction only if the smart card has access to the authentication data and if the associated limited validity duration has not expired. The smart card is able to send the generated message to the terminal in response to the request 32.

In one embodiment, the request 32 may be a Generate Application Cryptogram command (Generate AC command) as defined by EMV^{®} Integrated Circuit Card Specifications for Payment Systems, Version 4.3 for instance. The request 32 may be preceded by another request previously received by the smart card. This other request may be a Get Processing Options command (GPO command) as defined by EMV^{®} Integrated Circuit Card Specifications for Payment Systems, Version 4.3 for instance. In response to the GPO command, the smart card 10 may send to the terminal 30 a piece of information reflecting one or more Cardholder Verification Methods (CVM) which depends on the pre-authorization stored in the smart card.

For example, if the smart card 10 is coupled to the terminal 30 in contact mode and stores a valid authentication data, the smart card 10 may send a response to the GPO command that comprises either an Application Interchange Profile (AIP) data reflecting that no CVM is available or a CVM list reflecting that no CVM is available.

For example, if the card 10 is coupled to the terminal 30 in contactless mode and stores a valid authentication data, the smart card 10 may send a response to the GPO command that comprises either an Application Interchange Profile (AIP) data reflecting that the cardholder has already been authenticated or a Card Transaction Qualifier (CTQ) data reflecting that the cardholder has already been authenticated.

Thus the terminal 30 may be conventional terminal that adapts its own behavior to the Cardholder verification method(s) identified by the smart card.

Depending on the content of the response to the GPO command, the terminal may request the cardholder to enter their PIN code on a keyboard of the terminal if the card does not have a valid pre-authentication.

It should be noted that the smart card may be configured to dynamically build of set of CVM which depends on the successful pre-authentication of the cardholder (i.e. the set of CVM which is built by the card may depend on the existence of a valid authentication data stored in the smart card.) In other words, the content of the CVM list may be dynamically generated by the card instead of being hardcoded like in conventional smart cards.

In some embodiments, the smart card may embed a real time clock (19) and may be configured to check if the limited validity duration has expired by comparison with the real time clock.

In some embodiments, the smart card may be configured to retrieve a date/time from the coupled terminal 30 during the transaction and to check if the limited validity duration has expired by comparison with the retrieved date/time.

In some embodiments, the smart card may embed a capacitor configured to discharge in a time depending on the limited validity duration. The card may be configured to charge the capacitor when the authentication data becomes available for the smart card and to lose access to the authentication data as soon as has the capacitor is discharged.

In some embodiments, the smart card 10 may be designed to behave as a conventional card if the smartcard does not store a valid authentication data 14. In other words, the smart card may wait for a personal data 52 captured by the terminal before computing a new data reflecting the authentication of the user during the transaction.

Figure 2 depicts a diagram of architecture of a system comprising a portable apparatus 40 and a smart card 10 according to an example of the invention.

The smart card 10 has an architecture similar to the one of Figure 1 and also comprises a second physical communication interface 18 designed to communicate with a portable apparatus 40 in contactless mode. The smart card 10 may also be devoid of user input interface 17.

The portable apparatus may embed a user input interface 42 allowing to capture a personal data 52 provided by a user 50 (I.e. an individual). For example, the user input interface may include a keyboard, a microphone, a motion sensor, a camera or a biometric sensor. Preferably, the portable apparatus is a smartphone. In some embodiments, the portable apparatus 20 may be a tablet PC, a PDA or a wearable device like a watch, a key fob or a bracelet.

The portable apparatus may embed an authenticating unit 44 which is configured to authenticate the user by checking the validity of the personal data 52 captured by the user input interface 42 and to generate an authentication data 14 reflecting a successful authentication of the user. Preferably, the personal data 52 is a fingerprint. Depending on the nature of the user input interface 42, the captured personal data 52 may be a PIN code, a password, a gesture, a drawn pattern or a picture or another kind of biometric data for instance.

The authenticating unit 44 may be implemented as a software application.

The portable apparatus 40 and the smart card 10 are configured to establish a wireless communication channel and to communicate using a contactless protocol relying on NFC or Bluetooth Low Energy@ (BLE) technology for instance.

The smart card may be configured to receive the authentication data 14 generated by the apparatus 40 through its second physical communication interface 18.

In some embodiments, the smart card may be configured to get power through the second physical communication interface 18.

In some embodiment, the authenticating unit 44 may be configured to associate a limited validity duration to the authentication data 14 and to send both the authentication data and its associated validity duration to the smart card.

In some embodiment, the smart card may be configured to associate a limited validity duration to the authentication data 14 received from the apparatus 40.

In some embodiment, the apparatus 40 may forward the captured personal data 52 to the smart card which may generate the authentication data 14 using the received personal data.

In all embodiments, the smart card 10 is configured to store the authentication data 14 and the associated limited validity duration into its own memory.

It should be noted that the capture of the personal data, the generation of the authentication data and the storing of the pair constituted by the authentication data and the associated duration validity is performed by the system comprising the portable apparatus and smart card independently of any transaction. Consequently, all these operations may be performed before a transaction starts with a terminal which will be coupled to the smartcard 10 afterwards.

In a same way as described at Figure 1, the smart card may embed a real time clock 19 or a capacitor which is used to check if the validity time of associated to the authentication data has expired.

In some embodiments, the portable apparatus 40 may be configured to identify a constraint that the smart card must respect to use the authentication data 14 and to send the constraint to the smart card. The constraint may be in the group: the limited validity duration, a maximum amount for a payment transaction, a cumulated payment amount for a payment transaction, a number of consecutive transactions or an authorized security level for a requesting access to a specific security level area.

In this case, the smart card may be configured to generate a message 34 which authorizes a transaction only if the smart card has access to the first, if the associated limited validity duration has not expired and if the constraint received from the apparatus 40 is respected/satisfied.

For example, if the constraint is the fact that the authentication data is valid for a payment transaction whose amount is below 60 Euros, the smart card may be configured to deny a payment transaction whose amount is equal to 63 Euros even if the card has access to an authentication data associated to a valid time.

In another example, if the constraint is the fact that the authentication data is valid for a cumulated payment amount equal to 70 Euros, the smart card may be configured, by using the authentication data, to authorize a first payment transaction whose amount is 40 Euros, then to deny a second payment transaction whose amount is equal to 33 Euros, then to authorize a third payment transaction whose amount is 25 Euros.

In another example, if the constraint is the fact that the authentication data is valid for accessing a medium or low security level zone, the smart card may be configured to deny a transaction requesting access to a high security level zone.

In some embodiments, the constraint may be linked to the validity duration. For instance, the constraint may be the fact that the authentication data is valid for authorizing a payment transaction whose amount is below 100 Euros with a first validity duration set to 120 seconds and that the authentication data is valid for authorizing a payment transaction whose amount is below 50 Euros with a second validity duration set to 30 minutes.

In some embodiments, the smart card 10 may store a policy and may be configured to use the stored policy when generating the message 34 intended to be sent to the terminal. The policy may define one or more conditions in which an authentication data generated before a transaction can be used to authorize the transaction. For example, the policy may specify a maximum amount for a payment transaction, a cumulated payment amount for a payment transaction, a number of consecutive transactions or an authorized security level for a requesting access to a specific security level area.

In some embodiments, the portable apparatus may embed a companion application configured to manage and update the policy stored in the smart card.

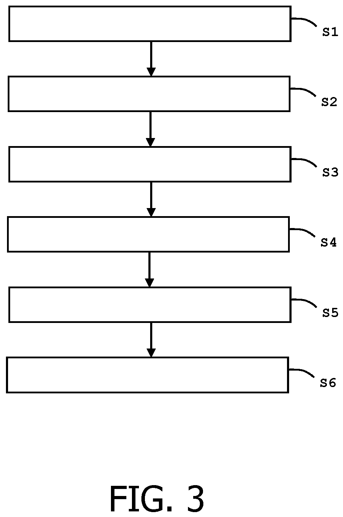

Figure 3 depicts an exemplary flow diagram for controlling a smart card according to an example of the invention.

In this example, the smart card is a payment card.

The cardholder may want to perform a transaction at a Point-Of-Sale terminal.

Before the transaction starts with the terminal, the cardholder may present a personal data either directly to the card or through a portable apparatus distinct from the terminal.

At a steps S1, an authentication data reflecting a successful authentication of the user is generated by checking the captured personal data.

Then at a steps S2, a limited validity duration is associated to the authentication data.

Then at a steps S3, the authentication data and the associated limited validity duration are stored into a memory of the smart card.

Steps S1 to S3 may be performed before approaching the terminal or while waiting behind other customers for instance.

Once the payment transaction has started between the payment terminal and the smart card, the smart card receives a request to authorize the transaction at step S4. The request is sent by the terminal.

Then at a steps S5, upon receipt of the request, the smart card generates a message which authorizes the transaction only if the smart card has access to the authentication data and if the limited validity duration has not expired.

Then at a steps S6, the smart card sends the generated message to the terminal.

In some embodiments, the smart card may be configured to update either the authentication data or a metadata specifying a rule to access the authentication data when generating the message. For example, the smart card may erase the authentication data as soon as the authentication data is used to generate the message in order to make the authentication data inaccessible for further transactions. In another example, the smart card may update a metadata (associated to the authentication data) specifying a rule to access the authentication data in order to make the authentication data inaccessible for further transactions. For instance, the smart card may update a counter, a flag or a register associated to the authentication data.

In some embodiments, the portable apparatus 40 may be paired to the smart card 10 when it stores a secret value or a key allowing to securely access the content of the encipher/signed data sent by the smart card 10.

The invention is not limited to the described embodiments or examples. In particular, the described examples and embodiments may be combined.

The invention is not limited to Banking or access smart cards and applies to any smart card whose behavior depends on the authentication of the cardholder.

Although examples of the invention have been mainly provided in the banking domain, the invention also applies to other domains. For example, the smart card may provide access to a virtual area, a physical area like a building or a transport network.

## Claims

1. A method for controlling a smart card (10) allocated to a user (50) and able to participate to a transaction with a terminal (30),
**characterized in that** the method comprises the steps:
- Before the transaction starts:
- generating (S1) an authentication data (14) reflecting a successful authentication of the user by checking a personal data (52) provided by the user,
- Associating (S2) a limited validity duration to the authentication data,
- Storing (S3) said authentication data and said limited validity duration into the smart card,
- Once the transaction has started:
- Receiving (S4) by the smart card a request (32) to authorize the transaction sent by the terminal,
- Upon receipt of said request, generating (S5) a message (34) which authorizes the transaction only if the smart card has access to said authentication data and if the limited validity duration has not expired, then sending (S6) the message to the terminal.

2. The method according to claim 1, wherein said smart card is configured to update either said authentication data or a metadata specifying a rule to access said authentication data when generating said message.

3. The method according to claim 1, wherein said smart card embeds a real time clock (19) and an internal energy source (17) and wherein the smart card checks if the limited validity duration has expired by comparison with the real time clock.

4. The method according to claim 1, wherein said smart card embeds a capacitor configured to discharge in a time depending on the limited validity duration, wherein the card charges the capacitor when said authentication data becomes available for the smart card and wherein the card is lose access to the authentication data as soon as has the capacitor is discharged.

5. The method according to claim 1, wherein said smart card establishes a communication channel with a portable apparatus (40) distinct from the terminal (30), wherein said portable apparatus gets said personal data (52), generates said authentication data (14) and sends said authentication data to the smart card.

6. The method according to claim 5, wherein said personal data (52) is a PIN code, a password, a drawn pattern, a picture of the user or a fingerprint of the user.

7. The method according to claim 5, wherein said portable apparatus identifies a constraint that the smart card must respect to use said authentication data (14) and sends said constraint to the smart card, said constraint being in the group: Said limited validity duration, a maximum amount for a payment transaction, a cumulated payment amount for a payment transaction, a number of consecutive transactions or an authorized security level for an requesting access to a specific security level area.

8. A smart card (10) allocated to a user (50) and able to participate to a transaction with a terminal (30), **characterized in that** the smart card is configured to:
- Before the transaction starts:
- get an authentication data (14) reflecting a successful authentication of the user by checking a personal data (52) provided by the user,
- Associate a limited validity duration to the authentication data,
- Store said authentication data and said limited validity duration into the smart card,
- Once the transaction has started:
- Receive a request to authorize the transaction sent by the terminal,
- Upon receipt of said request, generate a message which authorizes the transaction only if the smart card has access to said authentication data and if the limited validity duration has not expired, then to send the message to the terminal.

9. The smart card according to claim 8, wherein said smart card is configured to generate said authentication data (14) and said limited validity duration.

10. The smart card according to claim 8, wherein said smart card embeds a real time clock (19) and an internal energy source (17) and wherein the smart card is configured to check if the limited validity duration has expired by comparison with the real time clock.

11. The smart card according to claim 8, wherein said smart card embeds a capacitor configured to discharge in a time depending on the limited validity duration, wherein the card is configured to charge the capacitor when said authentication data becomes available for the smart card and wherein the card is configured to lose access to the authentication data as soon as has the capacitor is discharged.

12. The smart card according to claim 8, wherein said smart card is configured to establish a communication channel with a portable apparatus (40) distinct from the terminal (30), wherein said portable apparatus gets said personal data (52), generates said authentication data (14) and sends said authentication data to the smart card.

13. The smart card according to claim 12, wherein said smart card is configured to establish a communication channel with a portable apparatus (40) distinct from the terminal (30), wherein said portable apparatus gets said personal data (52) and sends said personal data to the smart card and wherein said smart card generates said authentication data (14).

14. The smart card according to claim 12, wherein said portable apparatus is configured to identify a constraint that the smart card must respect to use said authentication data (14) and to send said constraint to the smart card, said constraint being in the group: Said limited validity duration, a maximum amount for a payment transaction, a cumulated payment amount for a payment transaction, a number of consecutive transactions or an authorized security level for an requesting access to a specific security level area.

15. A system (90) comprising a smart card according to claim 8 and a portable apparatus (40) distinct from the terminal (30),
wherein the smart card and the apparatus are configured to establish a communication channel, wherein said portable apparatus embeds a user interface (42) able to capture an input data from a user, and an authenticating unit (44) configured to generate said authentication data (14) and to send said authentication data to the smart card.
